# EUROPÄISCHE PATENTSCHRIFT

(11) **EP 1 372 054 B1**
(45) Veröffentlichungstag und Bekanntmachung des Hinweises auf die Patenterteilung: **09.01.2008**
(21) Anmeldenummer: 03012759.1
(22) Anmeldetag: 05.06.2003
(51) Int. Cl.: G05D 23/13

(54) **Regulierventil für Warmwasser-Zirkulationssysteme**
Control valve for a hot water circulation system
Vanne de régulation pour un système de circulation d'eau chaude

(30) Priorität: 13.06.2002 DE 10226289
(43) Veröffentlichungstag der Anmeldung: 17.12.2003
(73) Patentinhaber: Gebr. Kemper GmbH + Co. KG, 57462 Olpe (DE)
(72) Erfinder: Hilchenbach, Gerhard, 57462 Olpe (DE)
(74) Vertreter: Pürckhauer, Rolf

(56) Entgegenhaltungen:
- DE-A- 2 753 845
- DE-A- 10 056 715
- DE-C- 19 637 818
- DE-C- 19 834 151
- DE-U- 29 805 921
- DE-U- 29 823 960

## Beschreibung

Die Erfindung betrifft ein Regulierventil für Warmwasser-Zirkulationssysteme, mit einem Ventilgehäuse, in das ein durch die Wassertemperatur gesteuertes Thermostatelement zum Verstellen eines Regulierkolbens eingebaut ist, der mit einem Ventilsitz mit einer Durchflußöffnung zwischen Eingangs- und Ausgangskanal des Ventilgehäuses zur Regelung der Wasserdurchflußmenge zusammenwirkt, sowie mit einer Einrichtung zur Voreinstellung des Regulierkolbens (DE 100 56 715 A1).

In Wasserversorgungsanlagen mit großen Leitungslängen zwischen Warmwasserbereitungsgerät und Zapfstellen, beispielsweise in mehrstöckigen Gebäuden, wird parallel zu den einzelnen Steigleitungen eine Zirkulationsleitung verlegt, wobei die Zirkulationsleitung einerseits mit der Steigleitung und andererseits mit dem Warmwasserbereiter verbunden ist. Dadurch läßt sich eine Zirkulation des Warmwassers über den größten Teil der Versorgungsleitungen erzielen, so daß bei der Entnahme von Warmwasser aus der Warmwasserversorgungsanlage nur noch verhältnismäßig kleine Wassermengen ungenutzt durchlaufen müssen, bis das entnommene Wasser die gewünschte Temperatur aufweist.

Die Warmwassertemperatur in Warmwasserversorgungsnetzen liegt bevorzugt in einem Bereich von ca. 50°C, was einerseits für die Anwendungszwecke, wie zum Beispiel Spülen, Waschen, Duschen völlig ausreichend ist und zum anderen den Forderungen der Energieeinsparverordnung Rechnung trägt. Zudem ist bei solchen Vorlauftemperaturen in der Warmwasserversorgung ein Verbrühschutz an den Auslaufarmaturen überflüssig, da Temperaturen von 50°C noch keine Schädigungen der Haut der Benutzer hervorrufen können.

Allerdings stellen diese Warmwasserversorgungsanlagen Infektionsquellen für die sogenannte Legionärskrankheit dar, die insbesondere ältere Menschen, bevorzugt Raucher und Alkoholiker sowie Menschen mit Grundleiden wie Diabetes, Karzinomen, Leukämie oder Immun- und Abwehrschwächen, gefährden, da sich die Erreger der Legionärskrankheit, die Legionellen, bei Temperaturen unter 50°C sehr stark vermehren.

Die thermische Abtötung der Bakterien beginnt ab ca. 60°C und die Absterbezeit verkürzt sich mit steigender Temperatur sehr stark. Bei ca. 60°C beträgt diese 30 Minuten, während bei 70°C Wassertemperatur die Absterbezeit nur wenige Sekunden beträgt. Oberhalb von 72°C konnten bisher keine Legionellen nachgewiesen werden.

Die Vermehrung und das Überleben der Legionellen werden auch durch Stagnation des warmen Trinkwassers und durch die Anwesenheit von schlammigen Oberflächenbelägen (Biofilm) begünstigt.

Besonders stark wirkt sich dieses Problem in weitverzweigten Warmwasseranlagen aus, wie sie beispielsweise in Hotels, Krankenhäusern, Altenheimen, Schwimmbädern und ähnlichen Gebäuden existieren, wo immer wieder Warmwasserleitungen bzw. Leitungsteile bestehen, die über eine längere Zeitdauer nicht benutzt werden oder nicht zirkulieren und damit stehendes Wasser mit einer kritischen Temperatur enthalten.

Um den Gefährdungen, die insbesondere für die vorerwähnten Risikogruppen bestehen, durch Legionellen in Warmwasser zu begegnen, wird das warme Wasser mit Trinkwasserqualität in besonders gefährdeten Warmwasser-Zirkulationsnetzen, z.B. in Krankenhäusern, Altenheimen usw. auf über 50°C gehalten und kann in Einzelfällen oder periodisch auf 70°C bis 75°C aufgeheizt werden, um eine thermische Desinfektion durchzuführen.

Zur Durchführung eines hydraulischen Abgleichs werden in Warmwasser-Zirkulationssystemen thermostatisch regelnde Ventile der gattungsgemäßen Art, wie sie beispielsweise aus der DE 298 05 921.5 U1, der DE 198 34 151 C1 sowie der EP 1 167 841 A2 bekannt sind, eingesetzt, um den Wasser-Volumenstrom mit der gewünschten Zirkulationstemperatur gleichmäßig auf die einzelnen Zirkulationsstränge des Warmwasser-Zirkulationssystems zu verteilen. Derartige Regulierventile werden üblicherweise in jede Steigstrang-Rücklaufleitung, und zwar kurz vor deren Einmünden in die Zirkulationssammelleitung, eingebaut. Die Regulierventile stellen das hydraulische Gleichgewicht der Zirkulationsstränge untereinander her, d.h., der Drucküberschuß der Zirkulationspumpe wird gleichmäßig durch die Regulierventile, die eine Drosselfunktion ausüben, abgebaut. Dabei stellen die Regulierventile in den zirkulationspumpennahen Rohrsträngen große Differenzdrücke bei kleinen Volumenströmen und in den hydraulisch ungünstigen, pumpenfernen Rohrsträngen kleine Drücke bei großen Volumenströmen ein. Auf diese Weise werden die DVGW-Arbeitsblätter W551, W552 und W553 befolgt, daß alle Warmwasserleitungen innerhalb des Systems gleichmäßig mit hochtemperiertem Trinkwasser von 55 bis 60°C durchströmt werden, so daß ein vermehrtes Wachstum von Keimen (Legionellen) in den Wasserleitungen unterbunden wird, und alle Wasserleitungen des Leitungsnetzes durch heißes Trinkwasser mit einer Temperatur > 70°C thermisch desinfiziert werden können.

Die DE 100 56 715 A1 beschreibt ein Regulierventil der gattungsgemäßen Art für Warmwasser-Zirkulationssysteme mit einem Gehäuse, das einen Eingangs- und einen Ausgangskanal sowie eine Aufnahme aufweist, in die ein Ventiloberteil eingesetzt ist, das in Bezug auf einen gehäuseseitigen Ventilsitz verstellbar ist und einen hülsenartigen Bereich an seinem dem gehäuseseitigen Ventilsitz zugewandten Ende aufweist. In dem Ventiloberteil ist ein hülsenartiges Verschlußstück in Richtung auf den Ventilsitz verschiebbar angeordnet, wobei das Verschlußstück durch ein in das Ventiloberteil eingesetztes Thermostatelement verstellbar ist. Das hülsenartige Verschlußstück weist an seinem dem Ventilsitz zugewandten und an seinem diesem abgewandten Ende Durchflußöffnungen auf. Das Verschlußstück hat eine solche Länge, daß es in einer ersten Stellung, die durch einen von dem Thermostatelement vorgegebenen Abstand des Verschlußstückes zum Ventilsitz bestimmt ist, der größer ist als ein voreingestellter Sollwert-Abstand, in den hülsenartigen Bereich eintaucht, bei einer zweiten Stellung, die durch den am Ventiloberteil voreingestellten Sollwert-Abstand des Verschlußstückes zum Ventilsitz bestimmt ist, sowohl in den hülsenartigen Bereich des Ventiloberteils als auch in den Ventilsitz eintaucht, und in einer dritten Stellung, die durch den vom Thermostatelement und dem konstruktiv festgelegten Austrittspunkt des Verschlußstückes aus dem hülsenartigen Bereich des Ventiloberteils bestimmt ist, von dem hülsenartigen Bereich mit seinem rückwärtigen Ende freigegeben wird.

Bei einer unter der Solltemperatur liegenden Temperatur hält das von dem Thermostatelement betätigte Verschlußstück einen Abstand vom Ventilsitz ein, so daß Wasser durch den Ventilsitz des geöffneten Ventils fließt. Bei Erreichen der voreingestellten Solltemperatur ist das Verschlußstück vom Thermostatelement so weit vorgeschoben, daß es in den Ventilsitz eintaucht, wobei zwischen Verschlußstück und hülsenartigem Bereich des Ventiloberteils und auch zwischen Verschlußstück und Ventilsitz eine definierte Spaltströmung mit minimalem Durchfluß vorhanden ist. Bei weiterer Temperaturerhöhung des Wassers, die eine Hubvergrößerung des Thermostatelementes bewirkt, taucht das Verschlußstück zunehmend weiter durch den Ventilsitz, bis das rückwärtige Ende des Verschlußstücks aus der dem Ventilsitz zugewandten Mündung des hülsenartigen Bereichs des Ventiloberteils herausgleitet. Bei der Desinfektionstemperatur fließt das Wasser durch das Verschlußstück über den entstandenen Strömungsquerschnitt, der zwischen dem hinteren Ende des Verschlußstücks und dem Mündungsende des hülsenartigen Bereichs des Ventiloberteils gebildet ist. Diese Bildung des Strömungsquerschnitts und der damit einsetzende als Startpunkt bezeichnete Durchflußanstieg des heißen Wassers für die Desinfektionsphase hängt nur vom Hub des Thermostatelementes bzw. der auf dieses einwirkenden Wassertemperatur, das heißt der Starttemperatur, und dem konstruktiv festgelegten Austrittspunkt des hinteren Endes des Verschlußstücks aus dem Ventiloberteil ab, wobei das Verschlußstück in den Ventilsitz eingetaucht ist. Somit wird die Starttemperatur für den Beginn der Desinfektionsphase konstant gehalten und die Starttemperatur ist unabhängig von der voreingestellten Solltemperatur.

Aus der DE 298 23 960 U1 ist ein Regulierventil für Warmwasseranlagen bekannt, bei dem an dem Ventilgehäuse ein Anschlußstutzen zum Strang, ein Anschlußstutzen zum Verbraucher und ein Schraubstutzen zur Aufnahme eines Ventiloberteils mit einem an einer hohlen Ventilspindel angeordneten ersten Verschlußstück vorgesehen sind, welches mit einem Ventilsitz im Gehäuse eine drosselartige Voreinstellung für den Durchfluß bildet. In der hohlen Ventilspindel ist ein von außen gegen den Druck einer Feder betätigbares zweites hohles, doppeltwirkendes Ventilverschlußstück gegenüber einem entsprechenden Ventilsitz in der Ventilspindel zur Entleerung eines Stranges über die Ventilspindel von außen verschiebbar. Das zweite Ventilverschlußstück ist mit seinem dem Entleerungsventilsitz gegenüberliegenden Ende durch das erste Ventilverschlußstück hindurch in Richtung auf den Gehäuseventilsitz verschiebbar. Auf die Ventilspindel ist das Gehäuse eines Thermostatreglers mit einem gegen eine Überhubfeder wirkenden Dehnstoffelement aufgeschraubt, dessen Kolben gegen das zweite Ventilverschlußstück wirkt. Dieses Regulierventil dient dazu, in Trinkwasserzirkulationssystemen die Wassertemperatur in einem Bereich von 55°C zu halten. Bei einer Überschreitung dieser Temperatur drosselt das Ventil den Wasserdurchfluß auf eine Mindestmenge. Um eine Desinfektion des gesamten Anlagensystems vorzunehmen, wird die Wassertemperatur intervallmäßig auf 70°C und darüber angehoben. Zu diesem Zweck ist an dem Ventilgehäuse ein den ersten Ventilsitz umgehender Bypass mit einem zweiten Ventilsitz angeformt, mit dem ein weiterer Verschlußkörper zusammenwirkt, der durch eine Ventilspindel mit einem Handantrieb, einem thermischen Antrieb, einem elektrischen Antrieb oder einem funkgesteuerten Antrieb verstellbar ist. Für den thermischen Antrieb der Ventilspindel mit dem Verschlußkörper wird ein thermischer Regelaufsatz eingesetzt, der auf eine Wassertemperatur von 70°C eingestellt ist und der beim Erreichen dieser Temperatur das Bypassventil öffnet.

Der Erfindung liegt die Aufgabe zugrunde, ein Regulierventil der gattungsgemäßen Art für Warmwasser-Zirkulationssysteme zu entwickeln, das sich durch eine hohe Regelgenauigkeit und eine einfache Konstruktion auszeichnet.

Diese Aufgabe wird erfindungsgemäß gelöst durch ein Regulierventil mit den Merkmalen des Patentanspruchs 1.

Die Unteransprüche beinhalten vorteilhafte und zweckmäßige Weiterbildungen der Erfindung.

Das erfindungsgemäße Regulierventil zeichnet sich durch eine hohe Regelgenauigkeit aus, die dadurch erreicht wird, daß der Regelkolben zur Voreinstellung der Warmwasser-Durchflußmenge in ein Kartuschengehäuse mit integriertem Ventilsitz eingebaut ist, das in das Ventilgehäuse eingesetzt wird. Durch diese Ventilkonstruktion wird erreicht, daß der Regelkolben unabhängig von den Maßtoleranzen des Ventilgehäuses für die am Ventil voreingestellte Wassertemperatur von z.B. 50°C immer den gleichen Abstand zum Ventilsitz aufweist und damit bei der eingestellten Temperatur immer die gleiche Warmwassermenge durch das Ventil strömt und daß bei erhöhten Warmwassertemperaturen für die Desinfektion sich die verschiedenen Drosselstellungen des Ventils immer in der gleichen Temperaturabhängigkeit einstellen. Ferner wird durch die Verwendung einfacher Bauteile eine hohe Betriebssicherheit des Regulierventils erreicht.

Die Erfindung ist nachstehend anhand von Zeichnungsfiguren erläutert, die folgendes darstellen:
- Fig. 1: eine Längsschnittdarstellung des erfindungsgemäßen Regulierventils in vollständig geöffneter Stellung vor Regulierbeginn bei einer Betriebstemperatur < 50°C,
- Fig. 2: eine vergrößerte Längsschnittdarstellung der bei dem Regulierventil nach Fig. 1 verwendeten Regulierkartusche mit einer durch zwei Thermostatelemente gesteuerten Drosselstellung der bei dem Ventil zum Einsatz kommenden beiden Regulierkolben nach Erreichen der voreingestellten Sollwert-Temperatur von beispielsweise 57°C, die
- Fign. 3 u. 4: Längsschnittdarstellungen der Regulierkartusche mit zwei weiteren Drosselstellungen der beiden Regulierkolben im Verlauf einer thermischen Desinfektion bei einer Betriebstemperatur > 65°C bis 80°C und
- Fig. 5: das Funktionsdiagramm des Regulierventils.

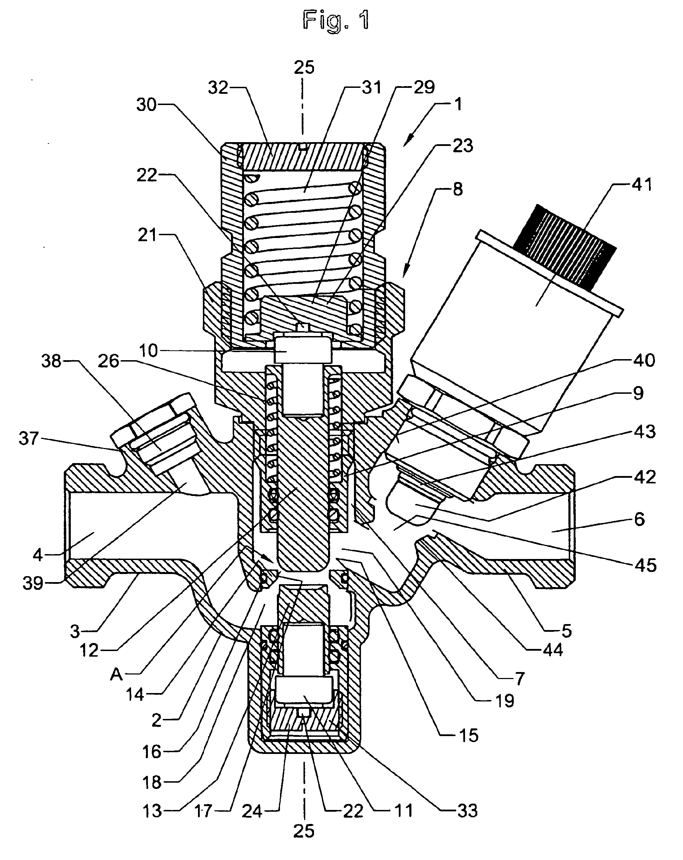

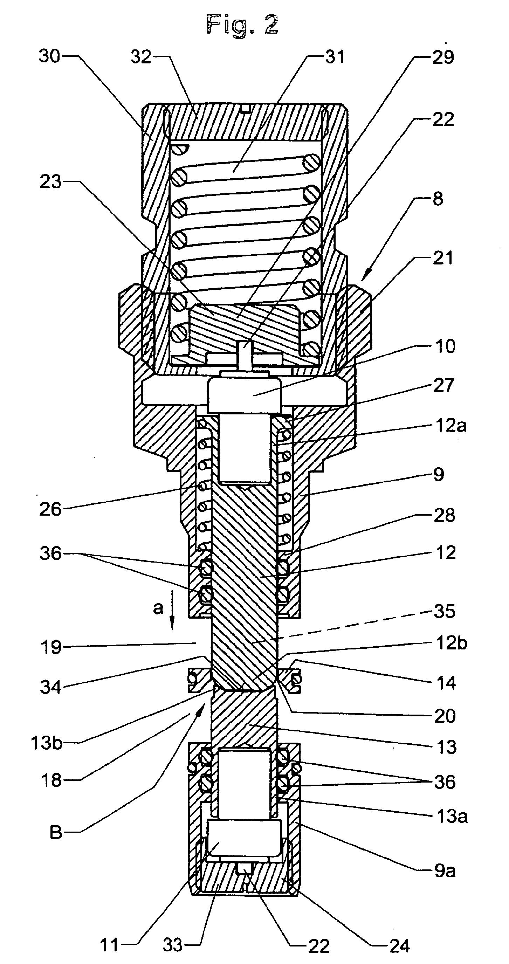

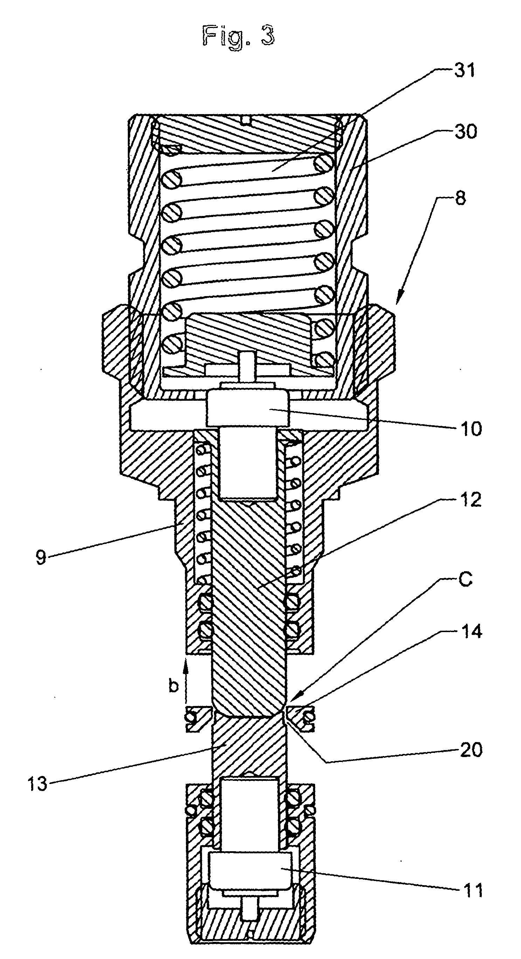

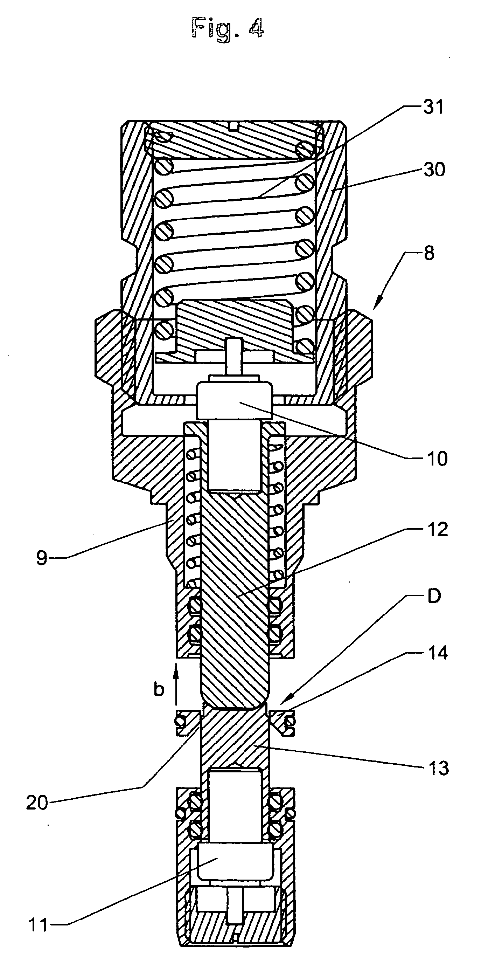

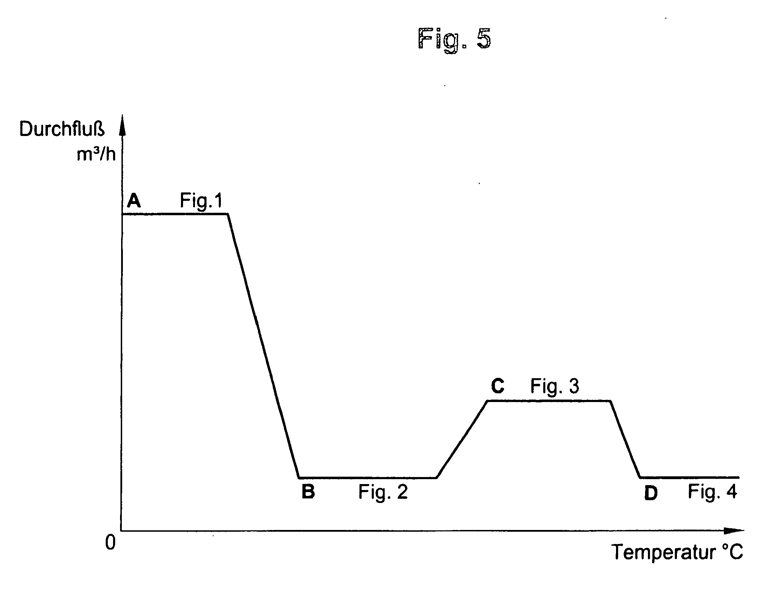

Das Regulierventil 1 für Warmwasser-Zirkulationssysteme nach den Fign. 1 bis 4 ist mit einem Ventilgehäuse 2 ausgestattet, das einen Einlaßstutzen 3 mit einem Eingangskanal 4, einen Auslaßstutzen 5 mit einem koaxial zu dem Eingangskanal 4 angeordneten Ausgangskanal 6 sowie einen Regulierkanal 7 aufweist, der etwa mittig zwischen und quer zu dem Eingangskanal 4 und dem Ausgangskanal 6 angeordnet ist und eine Regulierkartusche 8 aufnimmt.

In das aus einem Rohrstück bestehende, zylindrische Kartuschengehäuse 9 der Regulierkartusche 8 sind zwei entgegengesetzt wirkende Thermostatelemente 10, 11 zum entgegengesetzten Verstellen von zwei Regulierkolben 12, 13 eingesetzt, die mit einem mit dem Kartuschengehäuse 9 einteilig ausgebildeten Ventilsitzring 14 zusammenwirken. Der Ventilsitzring 14 sitzt in einer Öffnung 15 des Regulierkanals 7 und ist mittels eines Dichtringes 16 in der Kanalöffnung 15 abgedichtet. Der Ventilsitzring 14 besitzt eine Durchflußöffnung 17, die über Umfangsöffnungen 18, 19 im Kartuschengehäuse 9 mit dem Eingangs- und dem Ausgangskanal 4, 6 des Ventilgehäuses 2 in Verbindung steht und deren freier Durchströmquerschnitt durch die Position der durch den Ventilsitzring 14 unter Bildung eines Ringspaltes 20 verschiebbaren Regulierkolben 12, 13 regelbar ist.

Die von der Wassertemperatur abhängige Stellhubbewegung des ersten Thermostatelementes 10 beginnt bei einer Betriebstemperatur von ungefähr 50°C zur Regelung der durchlaufenden Wassermenge mit einer in einem bestimmten Temperaturbereich von beispielsweise 50 bis 60°C liegenden Betriebstemperatur und die temperaturabhängige Stellbewegung des zweiten Thermostatelementes 11 bei einer höheren Temperatur von beispielsweise 65°C zur Regelung einer verringerten Umlaufwassermenge mit einer in einem bestimmten Temperaturbereich von beispielsweise 65 bis 80°C liegenden Desinfektionstemperatur.

Die Regulierkartusche 8 ist mit einem mit dem Kartuschengehäuse 9 einteilig ausgebildeten Oberteil 21 in den Regulierkanal 7 des Ventilgehäuses 2 eingeschraubt oder eingepreßt.

Die Thermostatelemente 10, 11 sind jeweils in eine entsprechende Bohrung in dem dem Ventilsitzring 14 abgewandten Ende 12a, 13a der Regulierkolben 12, 13 eingesetzt und stützen sich mit einem aus- und einfahrbaren Stößel 22 gegen ein Widerlager 23, 24 ab.

Das Widerlager 23 des durch die Betriebstemperatur des Warmwassers gesteuerten ersten Thermostatelementes 10 ist in Richtung der Längsachse 25-25 des Kartuschengehäuses 9 nachgiebig ausgebildet, und der erste Regulierkolben 12 ist mittels einer entgegen der Stellkraft des Thermostatelementes 10 wirkenden Druckfeder 26 in dem Kartuschengehäuse 9 abgestützt, wobei die Druckfeder 26 zwischen einer Ringschulter 27 am oberen Ende 12a des ersten Regulierkolbens 12 und einem Ringabsatz 28 des Kartuschengehäuses 9 eingespannt ist.

Das nachgiebige Widerlager 23 des ersten Thermostatelementes 10 ist als eine Haltescheibe 29 ausgebildet, die in einem Einstellgehäuse 30 in Richtung der Längsachse 25-25 des Kartuschengehäuses 9 verschiebbar angeordnet und durch eine Druckfeder 31 beaufschlagt ist, wobei das Einstellgehäuse 30 zusammen mit der Haltescheibe 29 zur Voreinstellung des ersten Regulierkolbens 12 in dem Oberteil 21 des Kartuschengehäuses 9 in Richtung der Längsachse 25-25 des Kartuschengehäuses verschiebbar ist. Die Vorspannung der zwischen der Haltescheibe 29 und einer Gewindescheibe 32 in dem Einstellgehäuse 30 eingespannten Druckfeder 31 ist durch Verschrauben der Gewindescheibe 32 im Einstellgehäuse 30 einstellbar.

Die Federkraft der das nachgiebige Widerlager 23 des ersten Thermostatelementes 10 beaufschlagenden Druckfeder 31 ist größer als die Federkraft der auf den ersten Regulierkolben 12 wirkenden Druckfeder 26.

Die Stellkraft des ersten Thermostatelementes 10 ist größer als die Federkraft der den ersten Regulierkolben 12 beaufschlagenden Druckfeder 26, und die Stellkraft des zweiten Thermostatelementes 11 mit dem starren Widerlager 24 ist größer als die Federkraft der auf das nachgiebige Widerlager 23 des ersten Thermostatelementes 10 wirkenden Druckfeder 31.

Das starre Widerlager 24 des zweiten Thermostatelementes 11 wird durch eine Haltescheibe 33 gebildet, die zur Einstellung des zweiten Thermostatelementes 11 und des zweiten Regulierkolbens 13 in das untere Ende 9a des Kartuschengehäuses 9 verstellbar eingeschraubt ist.

Das mit dem Ventilsitzring 14 zusammenwirkende untere Ende 12b des ersten Regulierkolbens 12 ist kegelförmig ausgebildet und das mit dem Ventilsitzring 14 zusammenwirkende obere Ende 13b des zweiten Regulierkolbens 13 weist eine entsprechende kegelförmige Vertiefung 34 zur Aufnahme des unteren Endes 12b des ersten Regulierkolbens 12 auf und ist verjüngt.

Der Ventilsitzring 14 ist durch Längsstege 35 im Kartuschengehäuse 9 gehalten.

Die Regulierkolben 12, 13 sind mittels Dichtringen 36 im Kartuschengehäuse 9 abgedichtet.

Von dem Einlaßstutzen 3 mit dem Eingangskanal 4 des Ventilgehäuses 2 zweigt ein durch einen Stopfen 38 verschlossener Anschlußstutzen 37 mit einem Entleerkanal 39 zum Anschluß eines Entleerventils ab.

In dem Auslaßstutzen 5 des Ventilgehäuses 2 ist eine Aufnahmeöffnung 40 für ein Ventiloberteil 41 mit einem verstellbaren Regulierkegel 42 mit Dichtring 43 zum Absperren und/oder Regulieren der Durchflußöffnung 45 eines im Ausgangskanal 6 des Auslaßstutzens 5 des Ventilgehäuses 2 ausgebildeten Ventilsitzes 44 angeordnet.

Das Regulierventil 1 arbeitet wie folgt:

Bei der Betriebstemperatur eines Warmwasser-Zirkulationssystems unterhalb 50°C stehen die beiden Regulierkolben 12, 13 des Regulierventils in der voreingestellten, in Fig. 1 gezeigten Regulierstellung A, in der eine maximale Warmwassermenge durch das Regulierventil 1 fließt.

Die Stellhubbewegung des ersten Thermostatelementes 10 beginnt, sobald die Wassertemperatur von 50°C zu Beginn einer Desinfektionsphase überschritten wird, und der erste Regulierkolben 12 wird durch den Stellhub des Thermostatelementes 10 in Pfeilrichtung a nach unten durch die Durchflußöffnung 17 des Ventilsitzringes 14 bewegt, wodurch die Durchflußmenge kontinuierlich bis zu einem Minimalvolumenstrom in der Regulierstellung B gemäß Fig. 2 verringert wird. Dieser Minimalvolumenstrom wird durch den zwischen Regulierkolben 12 und Ventilsitzring 14 gebildeten Ringspalt 20 bestimmt.

Ab einer Wassertemperatur von 60°C beginnt die Stellhubbewegung des zweiten Thermostatelementes 11, und die beiden Regulierkolben 12, 13 werden zusammen durch den Stellhub des Thermostatelementes 11 über die in Fig. 3 dargestellte Regulierstellung C, in der die durch das Regulierventil strömende Wassermenge wieder ansteigt, in die Regulierstellung D nach Fig. 4 in Pfeilrichtung b nach oben bewegt. In der Regulierstellung D fließt bei einer Wassertemperatur von ungefähr 75°C wieder eine minimale Wassermenge durch das Regulierventil. Die nach oben gerichtete Hubbewegung der beiden Regulierkolben 12, 13 in Pfeilrichtung b wird durch die in dem Einstellgehäuse 30 angeordnete Druckfeder 31 kompensiert.

Wenn sich das durch das Rohrleitungssystem zirkulierende Heißwasser nach der Beendigung der Desinfektionsphase wieder auf ungefähr 50°C abkühlt, bewegen sich die ausgefahrenen Stößel 22 der Thermostatelemente 10, 11 wieder zurück, indem zuerst bis ca. 65°C das zweite Thermostatelement 11 zurückfährt und die Kraft der Feder 31 beide Regulierkolben 12, 13 entgegen der Pfeilrichtung b nach unten schiebt und anschließend von ca. 60°C bis 50°C das erste Thermostatelement 10 zurückfährt und die Kraft der Feder 26 den ersten Regulierkolben 12 wieder in die Anfangsstellung A nach Fig. 1 schiebt.

Die Betriebsweise des Regulierventils wird nochmals durch das Diagramm nach Fig. 5 verdeutlicht, das die durch das Ventil fließende Wassermenge in Abhängigkeit von der Wassertemperatur zeigt.

## Patentansprüche

1. Regulierventil für Warmwasser- Zirkulationssysteme, mit einem Ventilgehäuse (2), das einen Eingangskanal (4) und einen Ausgangskanal (6) aufweist, die durch einen Regulierkanal (7) verbunden sind, und mit einer in den Regulierkanal (7) eingebauten Regulierkartusche (8) mit einem zylindrischen Kartuschengehäuse (9), das ein durch die Wassertemperatur gesteuertes erstes Thermostatelement (10) zum Verstellen eines ersten Regulierkolbens (12) aufnimmt und das mit einem Einstellgehäuse (30) zur Voreinstellung des ersten Regulierkolbens (12) versehen ist, **dadurch gekennzeichnet, daß** die Regulierkartusche (8) ein durch die Wassertemperatur gesteuertes zweites Thermostatelement (11) zum Verstellen eines zweiten Regulierkolbens (13) entgegengesetzt zum ersten Regulierkolben (12) und einen mit dem zylindrischen Kartuschengehäuse (9) einteilig ausgebildeten Ventilsitzring (14) aufweist, der abgedichtet in einer entsprechenden Öffnung (15) des Regulierkanals (7) gehalten ist und der zur Regelung der Wasserdurchflußmenge mit den beiden Regulierkolben (12, 13) zusammenwirkt, wobei der Ventilsitzring (14) eine Durchflußöffnung (17) aufweist, die über Umfangsöffnungen (18, 19) im Kartuschengehäuse (9) mit dem Eingangs- und dem Ausgangskanal (4, 6) des Ventilgehäuses (2) in Verbindung steht und deren freier Durchströmquerschnitt durch die Position der durch den Ventilsitzring (14) unter Bildung eines Ringspaltes (20) verschiebbaren Regulierkolbens (12, 13) regelbar ist, und wobei die von der Wassertemperatur abhängige Stellhubbewegung des ersten Thermostatelementes (10) bei einer Betriebstemperatur von beispielsweise 50° C zur Regelung der durchlaufenden Wassermenge mit einer in einem bestimmten Temperaturbereich von beispielsweise 50 - 60° C liegenden Betriebstemperatur und die temperaturabhängige Stellhubbewegung des zweiten Thermostatelementes (11) bei einer höheren Temperatur von beispielsweise 60° C zur Regelung einer verringerten Umlaufwassermenge mit einer in einem bestimmten Temperaturbereich von beispielsweise 60 - 75° C liegenden Desinfektionstemperatur beginnt.

2. Regulierventil nach Anspruch 1, **dadurch gekennzeichnet, daß** die Regulierkartusche (8) mit einem mit dem Kartuschengehäuse (9) einteilig ausgebildeten Oberteil (21) in den Regulierkanal (7) des Ventilgehäuses (2) eingesetzt, insbesondere eingeschraubt oder eingepreßt ist.

3. Regulierventil nach Anspruch 1 und 2, **dadurch gekennzeichnet, daß** die Thermostatelemente (10, 11) jeweils in eine entsprechende Bohrung in dem dem Ventilsitzring (14) abgewandten Ende (12a), (13a) der Regulierkolben (12, 13) eingesetzt sind und sich mit einem aus- und einfahrbaren Stößel (22) gegen ein Widerlager (23, 24) abstützen.

4. Regulierventil nach Anspruch 1 und 2, **dadurch gekennzeichnet, daß** die Thermostatelemente (10, 11) mit ihrem Stößel (22) jeweils in eine entsprechende Bohrung in dem dem Ventilsitzring (14) abgewandten Ende (12a, 13a) der Regulierkolben (12, 13) eingesetzt sind und sich mit ihrem anderen Ende gegen ein Widerlager abstützen.

5. Regulierventil nach Anspruch 3, **dadurch gekennzeichnet, daß** das Widerlager (23) des durch die Betriebstemperatur des Warmwassers gesteuerten ersten Thermostatelements (10) in Richtung der Längsachse (25-25) des Kartuschengehäuses (9) nachgiebig ausgebildet ist und der erste Regulierkolben (12) mittels einer entgegen der Stellkraft des ersten Thermostatelementes (10) wirkenden Druckfeder (26) in dem Kartuschengehäuse (9) abgestützt ist, die (26) zwischen einer Ringschulter (27) am oberen Ende (12a) des ersten Regulierkolbens (12) und einem Ringabsatz (28) des Kartuschengehäuses (9) eingespannt ist.

6. Regulierventil nach einem der Ansprüche 1 bis 5, **dadurch gekennzeichnet, daß** das nachgiebige Widerlager (23) des ersten Thermostatelementes (10) als eine Haltescheibe (29) ausgebildet ist, die in dem Einstellgehäuse (30) in Richtung der Längsachse (25-25) des Kartuschengehäuses (9) verschiebbar angeordnet und durch eine Druckfeder (31) beaufschlagt ist, wobei das Einstellgehäuse (30) zusammen mit der Haltescheibe (29) zur Voreinstellung des ersten Regulierkolbens (12) in dem Oberteil (21) des Kartuschengehäuses (9) in Richtung der Längsachse (25-25) des Kartuschengehäuses verschraubbar ist.

7. Regulierventil nach einem der Ansprüche 1 bis 6, **dadurch gekennzeichnet, daß** die Federkraft der das nachgiebige Widerlager (23) des ersten Thermostatelementes (10) beaufschlagenden Druckfeder (31) größer als die Federkraft der auf den ersten Regulierkolben (12) wirkenden Druckfeder (26) ist.

8. Regulierventil nach einem der Ansprüche 1 bis 7, **dadurch gekennzeichnet, daß** die Stellkraft des ersten Thermostatelementes (10) größer als die Federkraft der den ersten Regulierkolben (12) beaufschlagenden Druckfeder (26) ist und die Stellkraft des zweiten Thermostatelementes (11) mit einem starren Widerlager (24) größer als die Federkraft der auf das nachgiebige Widerlager (23) des ersten Thermostatelementes (10) wirkenden Druckfeder (31) ist.

9. Regulierventil nach einem der Ansprüche 1 bis 8, **dadurch gekennzeichnet, daß** das mit dem Ventilsitzring (14) zusammenwirkende untere Ende (12b) des ersten Regulierkolbens (12) kegelförmig ausgebildet ist und das mit dem Ventilsitzring (14) zusammenwirkende obere Ende (13b) des zweiten Regulierkolbens (13) eine entsprechende kegelförmige Vertiefung (34) zur Aufnahme des unteren Endes (12b) des ersten Regulierkolbens (12) aufweist und verjüngt ist.

10. Regulierventil nach einem der Ansprüche 1 bis 9, **dadurch gekennzeichnet, daß** der Ventilsitzring (14) durch Längsstege (35) im Kartuschengehäuse (9) gehalten ist.

11. Regulierventil nach einem der Ansprüche 1 bis 10, **dadurch gekennzeichnet, daß** die Regulierkolben (12, 13) mittels Dichtringen (36) in dem Kartuschengehäuse (9) abgedichtet sind.

12. Regulierventil nach einem der Ansprüche 1 bis 11, **dadurch gekennzeichnet, daß** der zweite Regulierkolben (13) zusätzlich mit einer Rückholfeder beaufschlagt ist.

13. Regulierventil nach einem der Ansprüche 1 bis 12, **dadurch gekennzeichnet, daß** von dem Einlaßstutzen (3) mit dem Eingangskanal (4) des Ventilgehäuses (2) ein Anschlußstutzen (37) mit einem Entleerkanal (39) zum Anschluß eines Entleerventils abzweigt.

14. Regulierventil nach einem der Ansprüche 1 bis 13, **dadurch gekennzeichnet, daß** in dem Auslaßstutzen (5) des Ventilgehäuses (2) eine Aufnahmeöffnung (40) für ein Ventiloberteil (41) mit einem verstellbaren Regulierkegel (42) mit Dichtring (43) zum Absperren und/oder Regulieren der Durchflußöffnung (45) eines im Ausgangskanal (6) des Auslaßstutzens (5) des Ventilgehäuses (2) ausgebildeten Ventilsitzes (44) angeordnet ist.

## Claims

1. Control valve for hot water circulation systems, having a valve housing (2) which has an inlet channel (4) and an outlet channel (6) which are connected by a control channel (7), and having a control cartridge (8) which is incorporated in the control channel (7) with a cylindrical cartridge housing (9) which receives a first thermostat element (10), which is controlled by the water temperature, for displacing a first control piston (12) and which is provided with an adjustment housing (30) for presetting the first control piston (12), **characterised in that** the control cartridge (8) has a second thermostat element (11), which is controlled by the water temperature, for displacing a second control piston (13) opposite the first control piston (12) and has a valve seat ring (14) which is configured in one piece with the cylindrical cartridge housing (9), which valve seat ring is retained sealed in a corresponding opening (15) of the control channel (7) and cooperates with the two control pistons (12, 13) for regulating the water throughflow quantity, the valve seat ring (14) having a throughflow opening (17) which is connected via circumferential openings (18, 19) in the cartridge housing (9) to the inlet and the outlet channel (4, 6) of the valve housing (2) and the free throughflow cross-section of which can be controlled by means of the position of the control piston (12, 13) which can be displaced by the valve seat ring (14) with formation of an annular gap (20), and the adjustment stroke movement of the first thermostat element (10), which is dependent upon the water temperature, beginning at an operating temperature of for example 50°C for controlling the quantity of water flowing through at an operating temperature in a specific temperature range of for example 50 - 60°C and the temperature-dependent adjustment stroke movement of the second thermostat element (11) at a higher temperature of for example 60°C for controlling a reduced quantity of circulating water at a disinfection temperature in a specific temperature range of for example 60 - 75°C.

2. Control valve according to claim 1, **characterised in that** the control cartridge (8) with an upper part (21) which is configured in one piece with the cartridge housing (9) is inserted, in particular screwed or pressed into the control channel (7) of the valve housing (2).

3. Control valve according to claim 1 and 2, **characterised in that** the thermostat elements (10, 11) are inserted respectively into a corresponding boring in the end (12a, 13a) of the control pistons (12, 13), which end is orientated away from the valve seat ring (14), and are supported against an abutment (23, 24) with a tappet (22) which can be moved in and out.

4. Control valve according to claim 1 and 2, **characterised in that** the thermostat elements (10, 11) with their tappet (22) are inserted respectively into a corresponding boring in the end (12a, 13a) of the control pistons (12, 13), which end is orientated away from the valve seat ring (14), and are supported with their other end against an abutment.

5. Control valve according to claim 3, **characterised in that** the abutment (23) of the first thermostat element (10) which is controlled by the operating temperature of the hot water is configured to be yielding in the direction of the longitudinal axis (25 - 25) of the cartridge housing (9), and the first control piston (12) is supported in the cartridge housing (9) by means of a compression spring (26) which acts in opposition to the adjustment force of the first thermostat element (10), said compression spring (26) being clamped between an annular shoulder (27) at the upper end (12a) of the first control piston (12) and an annular shoulder (28) of the cartridge housing (9).

6. Control valve according to one of the claims 1 to 5, **characterised in that** the yielding abutment (23) of the first thermostat element (10) is configured as a retaining disc (29) which is disposed displaceably in the adjustment housing (30) in the direction of the longitudinal axis (25 - 25) of the cartridge housing (9) and is impinged upon by a compression spring (31), the adjustment housing (30) together with the retaining disc (29) being able to be screwed in the direction of the longitudinal axis (25 - 25) of the cartridge housing for presetting the first control piston (12) in the upper part (21) of the cartridge housing (9).

7. Control valve according to one of the claims 1 to 6, **characterised in that** the spring force of the compression spring (31) impinging upon the yielding abutment (23) of the first thermostat element (10) is greater than the spring force of the compression spring (26) acting on the first control piston (12).

8. Control valve according to one of the claims 1 to 7, **characterised in that** the adjustment force of the first thermostat element (10) is greater than the spring force of the compression spring (26) impinging upon the first control piston (12), and the adjustment force of the second thermostat element (11) with a rigid abutment (24) is greater than the spring force of the compression spring (31) acting on the yielding abutment (23) of the first thermostat element (10).

9. Control valve according to one of the claims 1 to 8, **characterised in that** the lower end (12b) of the first control piston (12) which cooperates with the valve seat ring (14) has a conical configuration and the upper end (13b) of the second control piston (13) which cooperates with the valve seat ring (14) has a corresponding conical recess (34) for receiving the lower end (12b) of the first control piston (12) and it is tapered.

10. Control valve according to one of the claims 1 to 9, **characterised in that** the valve seat ring (14) is retained by longitudinal webs (35) in the cartridge housing (9).

11. Control valve according to one of the claims 1 to 10, **characterised in that** the control pistons (12, 13) are sealed by means of sealing rings (36) in the cartridge housing (9).

12. Control valve according to one of the claims 1 to 11, **characterised in that** the second control piston (13) is impinged upon in addition by a restoring spring.

13. Control valve according to one of the claims 1 to 12, **characterised in that** a connecting piece (37) with an emptying channel (39) for connection of an emptying valve branches off from the inlet connecting piece (3) with the inlet channel (4) of the valve housing (2).

14. Control valve according to one of the claims 1 to 13, **characterised in that** there is disposed in the outlet connecting piece (5) of the valve housing (2) a receiving opening (40) for a valve upper part (41) with a displaceable control cone (42) with a sealing ring (43) for blocking and/or controlling the throughflow opening (45) of a valve seat (44) which is configured in the outlet channel (6) of the outlet connecting piece (5) of the valve housing (2).

## Revendications

1. Vanne de régulation de systèmes de circulation d'eau chaude, comprenant un corps (2) de vanne, qui a un canal (4) d'entrée et un canal (6) de sortie communiquant par un canal (7) de régulation et une cartouche (8) de régulation insérée dans le canal (7) de régulation et ayant un boîtier (9) de cartouche cylindrique, qui reçoit un premier élément (10) de thermostat commandé par la température de l'eau et destiné à déplacer un premier piston (12) de régulation et qui est muni d'un boîtier (30) de réglage pour régler à l'avance le premier piston (12) de régulation, **caractérisée en ce que** la cartouche (8) de régulation a un deuxième élément (11) de thermostat commandé par la température de l'eau et destiné à déplacer un deuxième piston (13) de régulation en sens inverse du premier piston (12) de régulation et un anneau (14) qui forme le siège de la vanne, qui est d'un seul tenant avec le boîtier (9) de la cartouche cylindrique, qui est maintenu de manière étanche dans une ouverture (15) correspondante du canal (7) de régulation et qui coopère avec les deux pistons (12; 13) de régulation pour réguler le débit d'eau, l'anneau (14) formant siège de vanne ayant une ouverture (7) de passage, qui communique par des ouvertures (18, 19) de pourtour du boîtier (9) de cartouche avec le canal (4) d'entrée et le canal (6) de sortie du corps (2) de vanne et dont la section transversale libre de passage peut être réglée par la position des pistons (12, 13) de régulation, qui peuvent coulisser dans l'anneau (14) formant siège de vanne en formant un intervalle annulaire, et dans laquelle le mouvement de course de réglage en fonction de la température de l'eau du premier élément (10) de thermostat commence, pour une température de fonctionnement par exemple de 50° C pour la régulation de la quantité d'eau qui passe, à une température de fonctionnement se trouvant dans une plage de température déterminée de par exemple 50 à 60° C et le mouvement de course de réglage en fonction de la température du deuxième élément (11) de thermostat ou d'une température plus haute de par exemple 60° C commence, pour la régulation d'une quantité d'eau qui passe plus petite, à une température de désinfection se trouvant dans une plage de température déterminée par exemple de 60 à 75° C

2. Vanne de régulation suivant la revendication 1, **caractérisée en ce que** la cartouche (8) de régulation est insérée, par une partie (21) supérieure d'une seule pièce avec le boîtier (9) de la cartouche, dans le canal (7) de régulation du corps (2) de la vanne en y étant notamment vissée ou enfoncée.

3. Vanne de régulation suivant la revendication 1 et 2, **caractérisée en ce que** les éléments (10, 11) de thermostat sont insérés respectivement dans un trou correspondant de l'extrémité (12a, 13a) des pistons (12, 13) de régulation éloignée de l'anneau (14) formant le siège de la vanne et s'appuie sur une butée (23, 24) par un poussoir (22) pouvant entrer et sortir.

4. Vanne de régulation suivant la revendication 1 et 2, **caractérisée en ce que** les aimants (10, 11) de thermostat sont insérés par leur poussoir (22) respectivement dans un trou correspondant de l'extrémité (12a, 13a) des pistons (12, 13) de régulation éloignée de l'anneau (14) formant le siège de la vanne et s'appuie sur une butée par l'autre extrémité.

5. Vanne de régulation suivant la revendication 3, **caractérisée en ce que** la butée (23) du premier élément (10) de thermostat commandé par la température de fonctionnement de l'eau chaude est constituée de manière à céder dans la direction de l'axe (25-25) longitudinal du boîtier (9) de la cartouche, et le premier piston (12) de régulation est soutenu dans le boîtier (9) de la cartouche au moyen d'un ressort (26) de compression agissant à l'encontre de la force de réglage du premier élément (10) de thermostat, le ressort (26) étant tendu entre un épaulement (27) annulaire à l'extrémité (12a) supérieur du premier piston (12) de régulation et une partie (28) annulaire en retrait du boîtier (9) de la cartouche.

6. Vanne de régulation suivant l'une des revendications 1 à 5, **caractérisée en ce que** la butée (23) qui cède du premier élément (10) de thermostat est constituée sous la forme d'un disque (29) de maintien, qui est monté coulissant dans la direction de l'axe longitudinal (25-25) du boîtier (9) de cartouche dans le boîtier (30) de réglage et qui est soumis à l'action d'un ressort (31) de compression, le boîtier (30) de réglage pouvant être vissé dans la partie (21) du boîtier (9) de la cartouche dans la direction de l'axe (25-25) longitudinal du boîtier de la cartouche ensemble avec le disque (29) de maintien pour régler à l'avance le premier piston (12) de régulation.

7. Vanne de régulation suivant l'une des revendications 1 à 6, **caractérisée en ce que** la force élastique du ressort (31) de compression, agissant sur la butée (23) qui cède du premier élément (10) de thermostat, est plus grande que la force élastique du ressort (26) de compression agissant sur le premier piston (12) de régulation.

8. Vanne de régulation suivant l'une des revendications 1 à 7, **caractérisée en ce que** la force de réglage du premier élément (10) de thermostat est plus grande que la force élastique du ressort (26) de compression agissant sur le premier piston (12) de régulation et la force de réglage du deuxième élément (11) de thermostat avec une butée (24) rigide est plus grande que la force élastique du ressort (31) de compression agissant sur la butée (23) qui cède du premier élément (10) de thermostat.

9. Vanne de régulation suivant l'une des revendications 1 à 9, **caractérisée en ce que** l'extrémité (12b) inférieure, coopérant avec l'anneau (14) formant le siège de la vanne, du premier piston (12) de régulation est conique et l'extrémité (13b) supérieure, coopérant avec l'anneau (14) formant le siège de la vanne, du deuxième piston (13) de régulation se rétrécit et a une cavité (34) conique correspondante pour la réception de l'extrémité (12b) inférieure du premier piston (12) de régulation.

10. Vanne de régulation suivant l'une des a revendications 1 à 9, **caractérisée en ce que** l'anneau (14) formant le siège de la vanne est maintenu par des barrettes (35) longitudinales dans le boîtier (9) de la cartouche.

11. Vanne de régulation suivant l'une des revendications 1 à 10, **caractérisée en ce que** les pistons (12, 13) de régulation sont rendus étanches dans le boîtier (9) de la cartouche au moyen de joints (36) toriques.

12. Vanne de régulation suivant l'une des revendications 1 à 11, **caractérisée en ce que** le deuxième piston (13) de régulation est soumis en outre à un ressort de rappel.

13. Vanne de régulation suivant l'une des revendications 1 à 12, **caractérisée en ce qu'**un raccord (37) de connexion, ayant un canal (39) d'évacuation pour se raccorder à une vanne d'évacuation, part en dérivation de la tubulure (3) d'entrée, ayant le canal (4) d'entrée, du corps (2) de la vanne.

14. Vanne de régulation suivant l'une des revendications 1 à 13, **caractérisée en ce que**, dans la tubulure (5) de sortie du corps (2) de la vanne, est disposée une ouverture (40) de réception d'une partie (41) supérieure de la vanne ayant un cône (42) de régulation réglable à joint (43) torique pour obturer/ou pour réguler l'ouverture (45) de passage d'un siège (44) de vanne formé dans le canal (6) de sortie de la tubulure (5) de la sortie du corps (2) de la vanne.
